# EUROPEAN PATENT APPLICATION

(11) **EP 4 321 660 A1**
(43) Date of publication of application: **14.02.2024**
(21) Application number: 22190331.3
(22) Date of filing: 13.08.2022
(51) Int. Cl.: D01D 5/08, D01F 1/10, D01F 6/14, C08J 3/18, C08L 29/04

(54) **POLYVINYL ALCOHOL FIBRES AND FIBROUS PRODUCTS**

(71) Applicant: Aquapak IP Limited, Birmingham B31 5HE (GB)
(72) Inventor: WILLIAMS, John, Chirbury, Shropshire SY15 6UD (GB); GRIFFITHS, Sian, Glan Conwy, Conwy LL28 5LU (GB); ASHWORTH, Robert, Colwyn Bay, Conwy LL28 5YX (GB)
(74) Representative: Hepworth Browne

(57) **Abstract**

A method of manufacture of polyvinyl alcohol fibres comprising the steps of:
providing a polyvinyl alcohol composition comprising homopolymeric polyvinyl alcohol having a degree of hydrolysis of 88% to 98% or greater; and a molecular weight in the range from 22,000 to 38,000
a plasticiser selected from the group consisting of: sugar alcohols, diols, triols, polyols and mixtures thereof; and
a stabilizer selected from the group consisting of: sodium stearate, potassium oleate, sodium benzoate, calcium stearate, stearic acid, dimethyl, propionic acid and mixtures thereof;
melting the composition at a temperature from 220°C to 230°C;
extruding the melted composition to form an extrudate;
forming the extrudate into molten fibres; and
allowing the molten fibres to solidify to form solid fibres.

## Description

This invention relates to polyvinyl alcohol fibres, methods of making polyvinyl alcohol fibres and products manufactured from polyvinyl alcohol fibres. The invention relates particularly but not exclusively to products comprising non-woven polyvinyl alcohol fibres, methods of making non-woven polyvinyl alcohol fibres and products incorporating such fibres.

Polyvinyl alcohol has many advantages in comparison to polymers which are traditionally used for manufacture of non-woven fibre products. Polyvinyl alcohol is soluble in water, particularly when heated, facilitating reclamation, recycling and environmental degradation.

Polyvinyl alcohol is manufactured by hydrolysis of homopolymer or co-polymers of polyvinyl acetate. The degree of hydrolysis determines the properties of the resultant polymer. Co-polymeric polyvinyl alcohols or homopolymeric polyvinyl alcohol with a low degree (LD) of hydrolysis are easy to process but have inferior mechanical and chemical properties. Homopolymeric polyvinyl alcohol with a high degree (HD) of hydrolysis, for example 85% or greater, has superior properties but is not processable without degradation under conditions using apparatus employed for manufacture of polyolefin non-woven fibres.

Polyvinyl alcohol is soluble in water and fibres have traditionally been made by solution spinning methods using polyvinyl alcohol with a low degree (LD) of hydrolysis.

In order to enhance water resistance, thermal e.g. hot drawing and chemical e.g. acetylation steps have been required.

WO2017/046361 discloses a method for manufacture of processable polyvinyl alcohol having a degree of hydrolysis of 98% or greater.

WO2022/008521 discloses a method for manufacture of processable polyvinyl alcohol having a degree of hydrolysis in the range of 93% to 98% or more.

WO2022/008516 discloses a method for manufacture of plasticised polyvinyl alcohol having a degree of hydrolysis of 93% to 98% or more.

According to a first aspect of the present invention, a method of manufacture of polyvinyl alcohol fibres comprises the steps of:
providing a polyvinyl alcohol composition comprising homopolymeric polyvinyl alcohol having a degree of hydrolysis of 88% to 98% or greater; and a molecular weight in the range from 25000 to 36000;
a plasticiser selected from the group consisting of: sugar alcohols, diols, triols, polyols and mixtures thereof; and
a stabilizer selected from the group consisting of: sodium stearate, potassium oleate, sodium benzoate, calcium stearate, stearic acid, dimethyl, propionic acid and mixtures thereof;
melting the composition at a temperature from 220°C to 230°C;
extruding the melted composition to form an extrudate;
forming the extrudate into molten fibres; and
allowing the molten fibres to solidify to form solid fibres.

The molten fibres may be drawn to form individual solid fibres or a bundle of solid fibres.

Alternatively, the method may comprise the steps of:
forming the molten fibres into a molten or partially solidified non-woven fibre product; and
allowing the product to solidify to form a solid non-woven fibre product.

The degree of hydrolysis may be 95-98%.

The polyvinyl alcohol composition may have a melt flow index (MFI) of 30-70, for example 30-60, for example 30-50g/10min. A relatively low viscosity is preferred.

The polyvinyl alcohol may have a molecular weight in the range 22,000 to 38,000, for example, 26,000 to 35,000, for example 26,800 to 34,600.

The polyvinyl alcohol composition is preferably stable at the temperature at which it is melted and extruded. Polyvinyl alcohol, not containing a plasticiser and stabiliser as disclosed herein, particularly the homopolymer having a high degree of hydrolysis, is liable to decompose at the temperatures required for melting and extrusion processing.

Polyvinyl alcohol according to this invention can be processed into filaments or fibres. These may be converted by crimping and cutting into staple fibres suitable for carding, wet laying and air laying to form a range of non-woven products.

Advantageous polyvinyl alcohol fibres of this invention are capable of being processed on a commercial scale, for example using apparatus running at 4,500 m.min⁻¹

The stabilised polyvinyl alcohol polymers used in this invention may be manufactured in accordance with WO2022/008516 and WO2022/008521, the disclosures of which are incorporated into this specification by reference for all purposes.

The polyvinyl alcohol composition may be made by a method comprising the steps of:
introducing into a mixing reactor a polyvinyl alcohol polymer comprising homopolymeric polyvinyl alcohol or a blend thereof having a degree of hydrolysis in the range of 88 wt% to 98 wt% or more;
wherein the mixing reactor comprises a blending chamber having a primary inlet, a primary outlet and at least two inter-engaging components extending between the primary inlet and primary outlet, the components being arranged to apply a shearing force to the polymer while the polymer is conveyed by the components from the inlet through a reaction zone to the outlet;
one or more secondary inlets located downstream from the primary inlet for introducing reactants comprising a processing aid, a plasticiser and a reactive stabiliser to the chamber to form a reaction mixture;
wherein the plasticiser is selected from the group consisting of: sugar alcohols, diols, triols, polyols and mixtures thereof;
wherein the reactive stabiliser is selected from the group consisting of:
   sodium stearate, potassium oleate, sodium benzoate, calcium stearate, stearic acid, dimethyl propionic acid, and mixtures thereof;
   wherein the blending chamber comprises a plurality of heated regions arranged so that the mixture is subjected to a temperature profile whereby the temperature increases from the inlet to the outlet;
   a secondary outlet located between the reaction zone and primary outlet arranged to allow removal of processing aid from the chamber;
   reacting the processing agent, plasticiser and polymer in the reaction zone to form plasticised polymer; and
   allowing the plasticised polymer to pass from the primary outlet.

Use of a reactive mixing apparatus, typically an extruder in accordance with this invention allows the processing aid and plasticiser to be reacted with the polyvinyl alcohol or blend thereof, without decomposition of the polymer followed by removal of all or most of the processing aid from the secondary outlet to give plasticised polyvinyl alcohol or a blend thereof.

Use of a reactive stabiliser may result in an advantageous reduction in the extent of degradation during melt processing. This allows homopolymeric polyvinyl alcohol having a high degree of hydrolysis, for example 88 wt% or higher to be processed to form fibres or pellets from which fibres may be formed by extrusion.

The reactive stabiliser may be used in an amount of about 0.1 wt% to about 5 wt%, for example about 0.1 wt% to about 3 wt%, for example 0.1 wt% to about 1.5 wt%, for example from about 0.2 wt% to about 0.5 wt%, for example about 0.25 wt%.

The reactive stabilisers of this invention may decrease the extent of degradation of the polymer during processing. Homopolymeric polyvinyl alcohol has been difficult to process due to degradation at the high temperatures required. The liability of degradation has led to use of polyvinyl alcohol co-polymers with a consequent loss of engineering properties. This can be seen by UV spectral analysis of the amount of conjugation present in the polymer. Sodium benzoate has been found to be particularly effective.

Use of homopolymeric polyvinyl alcohol is particularly advantageous. Homopolymeric polyvinyl alcohol is manufactured by hydrolysis of homopolymeric polyvinyl acetate, the degree of hydrolysis being 93wt% or more in embodiments of this invention. Polyvinyl alcohol co-polymers made by hydrolysis of polyvinyl acetate co-polymers have inferior properties compared to homopolymeric polyvinyl alcohol. Homopolymeric polyvinyl alcohol may exhibit advantageous properties.

Polyvinyl alcohol polymers of this invention may have high tensile strength and flexibility.

The polyvinyl alcohol may be manufactured by hydrolysis of homopolymeric polyvinyl acetate, wherein the extent of hydrolysis is in the range from 88 wt% up to 98 wt%, for example 93 wt% to less than 98 wt%, for example 93 wt% to 97 wt%, for example 93 wt% to 95 wt%.

A blend of two or more polyvinyl alcohol polymers may be employed, for example a blend of two polyvinyl alcohol polymers with a relatively high molecular weight and a relatively low molecular weight respectively.

A blend of polyvinyl alcohols with the same molecular weight and different degrees of hydrolysis can be combined. Blending different polyvinyl alcohol grades together enables the properties of the resultant polymer to be enhanced, for example melt strength.

For fibre production a blend of two polyvinyl alcohol polymers with a molecular weight in the range 22,000 to 38,000, a first polymer having a low degree of hydrolysis and a second polymer having a high degree of hydrolysis may be blended in a ratio of 40:60 to 60:40, for example about 50:50 by weight.

The blends of different molecular weight polymers employed are selected in accordance with the physical properties required in the finished product. This may require different molecular weight materials being used. Use of more than two different molecular weight polymers may be advantageous. The use of a single molecular weight polymer is not precluded.

Use of a blend may allow control of the viscosity of the polymer. Selection of a stabiliser in accordance with the present invention allows use of blends of a desired viscosity without a loss of other properties. Alternatively, use of a blend may permit use of polyvinyl alcohol with one or more stabilisers while maintaining viscosity or other properties to permit manufacture of pellets or films.

The processing aid is preferably water. Alternatively, the processing aid may comprise a mixture of water and one or more hydroxyl compound with a boiling point less than the boiling point or melting point of the plasticiser. Use of water is preferred for cost and environmental reasons.

The plasticiser may be selected from the group consisting of:
(a) sugar alcohols selected from the group consisting of: diglycerol, triglycerol, fructose, ribose, xylose, D-mannitol, triacetin, and mixtures thereof; polyols selected from the group consisting of: pentaerythritol, dipentaerythritol, and mixtures thereof;
(b) diols selected from the group consisting of: methyl pentanediol, 1,2-propanediol, 1,4-butanediol, 2-hydroxy-1,3-propanediol, 3-methyl-1,3-butanediol, 3,3-dimethyl-1,2-butanediol, and mixtures thereof;
(c) glycols selected from the group consisting of: polyethylene glycol 300, polyethylene glycol 400, alkoxylated polyethylene glycol, and mixtures thereof;
(d) caprolactam, tricyclic trimethylolpropane formal, rosin esters, euricamide, and mixtures thereof.

When a mixture of plasticisers is employed, a binary mixture may be preferred.

In a first embodiment, the following plasticisers may be used in combination:
dipentaerythritol, methyl pentanediol, triacetin, 2-hydroxy-1,3-propanediol, 3,3-dimethyl-1,2-butanediol, tricyclic trimethylolpropane formal, D-mannitol, triglycerol, and xylose.

Preferably a binary composition of the plasticisers of the first embodiment is employed.

In a second embodiment, the following plasticisers are used alone or in combination with each other or in combination with one or more plasticisers of the first embodiment: caprolactam, alkoxylated polyethylene glycol.

The total amount of plasticiser in the formulation may be from about 15 wt% to about 30 wt%.

A suitable grade of dipentaerythritol is Di-Penta-93 (manufactured by Perstorp Corp.).

A suitable grade of caprolactam is Caprolactam 3031(manufactured by Ingevity).

A suitable grade of alkoxylated polyethylene glycol is Alkoxylate 4528 or Alkoxylate 3380 (manufactured by Perstorp Corp.).

The method of this invention provides many advantages. The method allows formation of thermally processable polyvinyl alcohol which can be used to create economical fibres that are highly functional while eliminating plastic pollution. Polyvinyl alcohol is water-soluble, non-toxic to the environment and inherently biodegradable. Hydrophilic polymers, for example, polyvinyl alcohol degrade environmentally faster than hydrophobic polymers and do not show bioaccumulation. Thermoplastic polyvinyl alcohol can be mechanically recycled into pellets for repeated use.

According to a second aspect of the present invention there is provided thermally processable polyvinyl alcohol fibre made in accordance with the first aspect of the present invention.

According to a third aspect of the present invention, there is provided a thermally processable non-woven fibre product comprising fibre made in accordance with the method of the first aspect of the present invention.

Thermally processable polyvinyl alcohol of this invention may be formed into fibres by various methods.

Filament extrusion may be used to form multifilament fibres.

Spunbonding may be used to form non-woven fabrics.

Meltblowing may be used to form non-woven fabrics.

A non-woven product is defined by ISO9092 as an engineered fibrous assembly, primarily planar, which has been given a designed level of structural integrity by physical and/or chemical means, excluding weaving, knitting or paper making.

Non-woven products comprising polyvinyl alcohol fibres of this invention in combination with fibres of cellulose pulp, viscose and mixtures thereof have excellent flushability, for example in accordance with UK Water Fine to Flush WIZ 4-02-06. Wet wipes manufactured from non-woven fibres of this invention exhibit excellent dry and wet tensile strength.

### Filament Extrusion

Fibres of this invention may be made by extrusion of filaments of the melted polyvinyl alcohol polymer through a spinneret having small holes, for example 0.25mm in diameter. The extruded filaments may be drawn using godet rollers rotating at different speeds to form a multi filament tow. The multifilament tow may be crimped by heating followed by shaping with toothed or fluted rollers and cutting with rotary blades to provide fibres of desired length. Use of specific fibre lengths may confer compatibility with various non-woven fibre processing techniques.

The following extrusion and drawing conditions may be employed.

An extrusion temperature of 200°C to 220°C may be employed, preferably 210°C to 220°C.

The number of filaments in a fibre may be in the range 24 to 72. Use of fibre comprising a bundle of 50 to 72 filaments may be advantageous to improve cohesion of the bundle of filaments during drawing and may allow for a higher drawing ratio. The larger number of filaments allows the tension applied during the drawing process to be distributed between the larger number of filaments.

The rotational speed of the first godet roller (godet 1) may be 200 to 310mpm (m/min). Use of a godet 1 speed greater than 300 mpm may increase the frequency of melt breaks. An optimum speed for godet 1 may be about 295mpm. The rotational speed of the godet 5 roller may be 350 to 1100 mpm. The rotational speeds of godets 2 to 4 may have intermediate values. A higher drawing ratio may be achieved using 72 filaments resulting a finer fibre of 3 dtex or greater at a godet 5 speed of 500 rpm or higher.

A metering pump speed of 3 to 9 rpm may be employed. Use of a speed in this range may improve stability of the process. A reduced residence time may reduce the risk of thermal degradation of the polymer.

A spin finish may be applied to the filaments before the fibre passes to the godet rollers. A non-aqueous spin finish oil may be employed; for example, Tallopol DT, Tallopon Biocone or Vystat. A spin finish content of 0.4 wt% to 4.7 wt% may be used at a spin finish pump speed of 4 to 15 rpm.

A minimum of 0.4 wt% of spin finish may be employed to provide sufficient cohesion between the filaments for drawing and winding.

Fibres in accordance with this invention may be laid to form non-woven layers or webs by various methods, including: carding, air laying or wet laying. The fibres in a web may be bonded by a method selected from: hydroentanglement, needle punching, chemical or adhesive bonding and thermal bonding.

In a carding method, fibre bundles are separated and individualised using carding wires to produce an orientated fibre network structure. Crimped polyvinyl alcohol fibres may be employed.

The opened polyvinyl alcohol fibres may be dried, for example at 130°C for 10 minutes prior to carding to improve uniformity of the resultant web.

Use of the thermally processable fibres of this invention allows manufacture on a commercial scale.

A blend of polyvinyl alcohol (PVOH) fibres with sustainable fibres may be employed, for example the sustainable fibres may be selected from: lyocell, bico, polylactic acid (bico PLA) and mixtures thereof.

A blending ratio of PVOH:lyocell of 70:30 wt% to 90:10 wt%, preferably 80:20 wt% or a ratio of PVOH:bico PLA of 70:30 wt% to 90:10 wt%, preferably 80:20 wt% may be employed.

The carded web may have an areal density of 60 to 40 gm⁻², for example about 50 gm⁻².

In an embodiment, 100% PVOH and 80:20 wt% PVOH:lyocell carded webs may be needlepunched at 9mm penetration depth, hydroentangled at 30 bar or chemically bonded using, for example, vinyl acetate-ethylene (VAE) binder.

Through air bonding in which hot air is forced through the web, for example by convection, may be employed to melt an adhesive to avoid producing excessive compression.

80:20 wt% PVOH:bico PLA carded webs may be through air bonded at 120°C for 2 minutes.

Air laying methods may be employed, in which a turbulent air stream is used to produce an isotropic fibre network.

In an embodiment, crimped PVOH fibres may be cut to a length of 5mm and blended with pulp fibres (approximately 2mm) Georgia Pacific (GP) cellulose.

Ratios of PVOH:cellulose of 80:20 wt% to 20:80 wt% for example about 50:50 wt% may be employed.

The areal density may be about 50 gm⁻², dependent on the application, for example single or multiple use applications.

The PVOH fibres may be dried, for example at 130°C for 10 minutes, to improve separation.

The airlaid webs may be hydroentangled and then dried.

Polyvinyl alcohol fibre-containing webs may be converted into hydroentangled airlaid non-woven fabrics having a high strength. The fibres, particularly comprising warm water soluble PVOH, were found to partially dissolve during the hydroentanglement process resulting in strong but stiff fabrics.

A wetlaying process may be used to form non-woven fabrics with hot water-soluble polyvinyl alcohol fibres. In this process the PVOH fibres are dispersed in water and transferred onto a foraminous conveyor through which the water is removed to deposit a web of fibres.

In embodiments, the fibres may be cut to a suitable length, for example 5mm and blended with pulp fibres, for example Sodra Black, at ratios of PVOH:pulp of 50:50 wt% to 20:80 wt%.

Lyocell fibres (1.4 dtex/5mm) may be blended at ratios of PVOH:pulp of 50:50 wt% to 20:80 wt%.

The areal density may be about 60gm⁻² . This density may be employed for manufacture of flushable wipes.

The wetlaid webs may be hydroentangled and dried at 100°C for 30 seconds.

The tensile strength was compared with commercial products. A blend of polyvinyl alcohol:pulp:lyocell in a ratio of 40:40:20 wt% exhibited a relatively high tensile strength of 11 to 13N, typically about 12N.

The hydroentangled wetlaid fabric incorporating pulp showed relatively good tensile strength. Pulp fibres have typically high liquid absorption capacity. After hydroentanglement, the wetlaid web remains saturated resulting in partial dissolution of the PVOH fibres during the drying stage. The PVOH fibres act as a binder alongside formed hydrogen bonds between the pulp fibres.

The increase in specific energy during hydroentanglement may increase the dry tensile strength of the fabrics incorporating lyocell fibres.

### Spunbonded Nonwoven Fabrics.

The spunbond process is a continuous converting technology for converting thermoplastic polymer into a non-woven fabric. The polymer pellets are melted and the melt is forced by spin pumps through special spinnerets having a large number of holes. At the exits of the spinnerets, molten polymers are cooled and drawn by blowing air at high pressure in order to impart strength to the individual filaments. The attenuation and stretching lead to molecular orientation of the polymer during formation of continuous filaments. The filaments may then be randomly laid on a conveyor belt forming a continuous filament non-woven fabric. Thermal bonding or calendering can be used to bond spun bonded webs.

The following is a summary of exemplary spun bonding parameters in accordance with this invention. Polymer compositions A and B (see below) may be particularly advantageous.

The die temperature may be in the range 205 to 227°C. Increasing the die temperature may result in a reduction of viscosity of the polyvinyl alcohol polymer. Each grade of polyvinyl alcohol polymer has a threshold temperature, in the range 230 to 250°C beyond which the polymer may cross link resulting in blockage of the spinneret.

Air pressure at the aspirator may be 50 to 110 kPa. The air pressure may have a positive impact on filament fineness. The air pressure may be increased to produce finer filaments. However, there is an optimum value in order to prevent melt breakage. This parameter may be influenced by both the intrinsic characteristics of the polymer, for example molecular weight, linearity, and crystallinity and by other processing parameters.

The aspirator to collector distance may be 0.15 to 0.20m. The distance between the aspirator and the collector may be optimised to achieve good collection of the filaments.

The extrusion speed may be 0.50 to 0.97 kg/h. Exemplary polyvinyl alcohol compositions in accordance with this invention may be processed successfully at high and low extrusion speeds. Higher extrusion speeds may result in coarser filament diameters.

The calendering temperature may be in the range 108 to 142°C. Increasing the calendering temperature may improve both the tensile strength of the fabric and reduce the sensitivity of the fabric when exposed to water.

Polyvinyl alcohol spun bond fabrics of this invention exhibit filament diameters within the range of typical spun bond fabrics and have high air permeability. The fabrics showed swelling and partial dissolution in contact with water. The fabrics find application in the manufacture of dry wipes, hygiene top sheets and core wraps, filtration and personal protective equipment, for example face masks.

### Meltblown Fabrics

Meltblowing is a one step process which transforms a melt-processable polymer, particularly polyvinyl alcohol compositions of this invention into non-woven fabric. Pellets of the polymer may be melted and the melt forced by spin pumps through spinnerets containing multiple small orifices. The extruded polymer strands are attenuated just after the die using streams of hot air. The attenuated filaments are subsequently laid down on a collector to form a meltblown web, thus forming a self-bonded meltblown web composed of fine filaments of the polyvinyl alcohol composition. Meltblown non-woven fabrics are characterised as having very fine filaments, typically in the range 1 to 5µm.

The following meltblown parameters may be employed.

The die temperature may be in the range 200-220°C. An optimal die temperature may be 220°C. At higher temperatures, frequent melt breaks may be observed.

The die air pressure may be in the range 2,700 to 2,925 rpm and the air flow volume may be in the range 5,900 to 6,900 l/min⁻¹. A higher air flow (6,900 l/m⁻¹ may allow more drawing of the polymer's stream and may allow the filament diameter to be reduced from 14.1µm to 12.6µm.

The die air temperature may be in the range 245 to 280°C. An increase in die air temperature may result in more frequent melt breaks. A die-to-collector distance of 0.24m may be optimal.

The extrusion speed may be in the range 6.5 to 8.3 rpm. A low throughput rate (6.5 rpm) may give good processability with less melt breaks.

Meltblown polyvinyl alcohol nonwoven fabrics of this invention find many applications which utilise the unique properties of homopolymeric polyvinyl alcohol.

Percentages and other quantities referred to in this specification are by weight unless stated otherwise and are selected from any ranges quoted to total 100%.

The invention is further described by means of example but not in any limitative sense.

In embodiments of the present invention the following polyvinyl alcohol homopolymer compositions may be employed.

**Polymer composition A**

| | |
|---|---|
| PVOH; degree of hydrolysis 98%; low viscosity | 35.97% |
| PVOH; degree of hydrolysis 89%; low viscosity | 35.97% |
| Trimethylol propane | 14.37% |
| Sodium benzoate | 0.21% |
| Glycerol | 4.29% |
| Water | 9.20% |

**Polymer composition B**

| | |
|---|---|
| PVOH; degree of hydrolysis 99%; high viscosity | 7.193% |
| PVOH; degree of hydrolysis 98%; low viscosity | 64.737% |
| Trimethylol propane | 14.37% |
| Sodium benzoate | 0.21 |
| Glycerol | 4.29% |
| Water | 9.20% |

**Polymer composition C**

| | |
|---|---|
| PVOH; degree of hydrolysis 98%; low viscosity | 35.87% |
| PVOH; degree of hydrolysis 89%; low viscosity | 35.87% |
| Di-pentaerythritol | 6.21% |
| Triacetin | 12.41% |
| Sodium benzoate | 0.25% |
| Water | 9.39% |

**Polymer composition D**

| | |
|---|---|
| PVOH; degree of hydrolysis 98%; low viscosity | 22.61% |
| PVOH; degree of hydrolysis 97%; medium viscosity | 52.76% |
| Di-pentaerythritol | 4.99% |
| Sodium benzoate | 0.25% |
| Triacetin | 10.00% |
| Water | 9.39% |

### Example 1

Multifilament polyvinyl alcohol fibres were extruded using the following parameters.

| Parameters | |
|---|---|
| Drying time prior to extrusion (h) | 8 |
| Extrusion temperature (°C) | 220 |
| Metering pump speed (rpm) | 9 |
| Godet 1 speed (mpm) | 295 |
| Godet 2 speed (mpm) | 297 |
| Godet 3 speed (mpm) | 500 |
| Godet 4 speed (mpm) | 515 |
| Godet 5 speed (mpm) | 530 |
| Spin finish pump speed (rpm) | 4 |
| Spin finish content (%) | 0.4 |
| Yarn titre (dtex) | 206-214 |
| Filament count | 72 |
| Filament titre (dtex/fil) | 2.9 |
| Tenacity (cN/dtex) | 3 |
| Die hole diameter (mm) | 0.25 |
| Spin finish used | Tallopol DT |

The fibres were crimped using an IR heater temperature 220°C, speed 1.4 m/min, indented roller temperature 100°C and throughput rate 17 g/h.

The following properties were observed.

| Parameters | Carded/ needlepunched | | Carded/ hydroentangled | | Carded/ through air bonding | Carded/ chemical bonding |
|---|---|---|---|---|---|---|
| Compositions | 100% PVOH | 80:20 PVOH: Lyocell | 100% PVOH | 80:20 PVOH: Lyocell | 80:20 PVOH: bicoPLA | PVOH & 17 wt% VAE |
| Areal density (g/m²) | 45 | 48 | 46 | 54 | 65 | 51 |
| Thickness (mm) | 0.9 | 1.5 | 0.7 | 1.5 | 2.1 | 0.7 |
| Dry tensile strength (N/25mm) | 2.1 | 7.3 | 1.8 | 7.2 | 5.0 | 42.9 |
| Wet tensile strength (N/25mm) | 3.6 | 8.4 | 1.6 | 4.1 | 2.9 | 11.6 |
| Dispersibility in the drainline | 14 | 10 | 2 | 5 | 4 | N/A |

The properties of airlaid hydroentangled PVOH webs were as follows.

| Parameters | Airlaid/Hydroentangled | | | | | |
|---|---|---|---|---|---|---|
| Composition | 100% PVOH | 80:20 PVOH: Lyocell | 50:50 PVOH: Lyocell | 20:80 PVOH: Lyocell | 80:20 PVOH: hemp | 50:50 PVOH: pulp |
| Areal density (g/m²) | 49 | 47 | 47 | 36 | 50 | 50 |
| Thickness (mm) | 0.7 | 0.7 | 0.8 | 0.7 | 0.8 | 0.7 |
| Dry tensile strength (N/25mm) | 3.2 | 2.01 | 1.8 | 20.9 | 1.8 | 17.1 |
| Wet tensile strength (N/25mm) | 2.0 | 1.5 | 1.8 | 0.5 | <0.1 | <0.1 |
| Dispersibility in the drainline (%) | 99 | 99 | 98 | 95 | 98 | 100 |
| Dispersibility in the sewer system (%) | 73 | 69 | 64 | 19 | 75 | 100 |

The properties of wetlaid hydroentangled PVOH webs were as follows.

| Parameters | Wetlaid/hydroentangled | | | | | |
|---|---|---|---|---|---|---|
| Areal density (g/m²) | 61 | 58 | 61 | 62 | 57 | 63 |
| Thickness (mm) | 0.9 | 0.9 | 0.8 | 1.6 | 1.1 | 1.0 |
| Dry tensile strength (N/25mm) | 3.9 | 4.8 | 16.4 | 15.0 | 12.4 | 12.0 |
| Wet tensile strength (N/25mm) | 3.1 | 3.5 | 5.2 | 1.4 | 4.4 | 3.1 |
| Dispersibility in the drainline (%) | 87 | 95 | 92 | 98 | 83 | 99 |
| Dispersibility in the sewer system (%) | 45 | 47 | 64 | 82 | 74 | 67 |

### Example 2

The tensile strength of webs comprising polyvinyl alcohol/pulp blends were compared with commercial flushable wipes.

The tensile strength was compared with lotion saturated wipes. The commercial wipes were squeezed by hand to remove excess lotion. The excess lotion was used to saturate the polyvinyl alcohol products of the present invention at a pick up of 200 to 300% wt%.

The wetlaid webs hydroentangled at high specific energy (30 bars x 2/bard x 4) exhibited higher wet tensile strength compared to the benchmark flushable wipes and the wetlaid webs hydroentangled at low specific energy (30 bars x 2 / 50 bars x 2). The increase in the specific energy had a positive impact on the wet tensile strength of the wetlaid hydroentangled fabrics with an increase of approximately 100-170%.

There was no significant differences in the wet strength between the 50:50 PVOH:Lyocell and 80:20 PVOH:Lyocell fabrics hydroentangled at the high specific energy (p>0.05).

### Example 3

The dispersibility in the drain line of polyvinyl alcohol/pulp blends was compared with commercial flushable wipes.

Tests were carried out to determine dispersibility in a sewer system. Commercial wipes showed low dispersibility with less than 60% passing a 5.6mm screen.

The PVOH wetlaid fabrics hydroentangled at low specific energy (30 bars x 2 / 50 bars x 2) showed relatively good dispersibility with > 70 %wt. passing the 5.6mm screen. The decrease in lyocell fibre length from 5mm to 3mm had a positive impact on dispersibility.

The dispersibility of the wetlaid hydroentangled fabrics decreased with increased specific energy (30 bars x 2 / 50 bards x 4). The fibres were more interlocked promoting fibre roping.

After the dispersibility test, the wetlaid webs hydroentangled at high specific energy showed fragments size < 4cm which is one of the alternative requirements to pass the dispersibility in the sewer system.

The PVOH fibres were successfully converted into wetlaid hydroentangled fabrics. The fabrics incorporating pulp fibres showed good dry and wet tensile strength and dispersibility, while the incorporation of lyocell fibres promoted the wet tensile strength but decreased the dispersibility of the hydroentangled wetlaid fabrics.

The commercial flushable wipes passed the dispersibility in the drainline test with more than 50 wt% passing through a 12.5mm screen.

The wetlaid hydroentangled polyvinyl alcohol-containing webs exhibited excellent results with more than 80 wt% passing through a 12.5 mm screen.

### Example 4

The hydroentangled wetlaid non-woven polyvinyl alcohol/pulp fabrics were compared with commercial flushable wipes.

The commercial flushable wipes showed low dispersibility with less than 60 wt% passing through a 5.6mm sieve. The hydroentangled wetlaid fabrics incorporating 20 wt% polyvinyl alcohol fibre and 80 wt% pulp exhibited excellent results with 90 wt% passing through a 5.6mm screen.

Webs comprising polyvinyl alcohol, pulp and viscose/lyocell exhibited better dispersibility performance in comparison to commercial flushable wipes.

Use of PVOH fibres in hydroentangled wetlaid fabrics incorporating pulp fibres improved the dry tensile strength. Incorporation of viscose or lyocell fibres improved the wet strength of the fabrics. A superior combination of wet strength and dispersibility performance was achieved using 40 wt% polyvinyl alcohol, 40 wt% pulp and 20 wt% viscose fibres.

### Example 5

A spunbonded non-woven fabric was manufactured as disclosed in this specification. Polymer composition A was employed. The following properties were observed.

The areal density was in the range of 52 to 62 g/m² The fabrics of this invention had medium to high areal densities compared to typical spun bond fabrics.

The thickness was 0.25 to 0.32 mm. The fabrics produced had thicknesses in the typical range of spun bonded fabrics (0.2 to 1.5 mm).

The filament diameter was in the range 23 to 31µm. The filament diameters were in the typical range for spun bond fabrics (15 to 35µm).

The air permeability at 200 Pa was in the range 2,242 to 4,876 1.m⁻² s⁻¹. The spun woven fabrics of this invention showed high air permeability. The fabrics of this invention exhibit good breathability and low pressure drop in use.

The tensile strength, MD was in the range 5-13 N/25mm. The tensile strength of the polyvinyl alcohol non-woven fabrics was sufficient to enable converting processes and wipes applications. Filament drawing may be enhanced to improve tensile strength.

### Example 6

Meltblowing of a polyvinyl alcohol composition of this invention was carried out using the following parameters. Polymer composition A was employed.

**Meltblowing parameters**

| Parameters | |
|---|---|
| Extruding zone 1 | 180°C |
| Extruding zone 2 | 200°C |
| Extruding zone 3 | 200°C |
| Die temperature | 222°C |
| Air temperature | 245°C |
| Air flow volume | 6900 l.min⁻¹ |
| Die-to-collector distance | 0.24m |
| Extrusion speed | 6.5 rpm |
| Die hole diameter | 0.25mm |
| Air angle | 45° |
| Air knife gap | 0.7mm |
| L/D ratio | 5 |

An advantageous polyvinyl alcohol polymer for formation of melt blown fabrics had a degree of hydrolysis of 94%, using trimethylolpropane as a plasticiser with additional glycerol.

The resultant spunbond fabrics had an areal density of 60.88g/m², thickness of 0.51mm; filament diameter of 12.61µm; air impermeability at 200 Pa of 3,536 l.min⁻² s⁻¹ and tensile strength, MD of 0.44 l/25mm.

A significant proportion (65%) of the filament diameters was measured between 5 and 14µm with an average filament diameter of 12.6µm. The air velocity was 6,900 l.min⁻¹ at an air flow of 6,200 l.min⁻¹, a significant proportion of the filament diameters was between 10 and 14µm with an average filament diameter of 14.12µm. Higher air velocity allowed attenuation of the polymers into fine filaments.

## Claims

1. A method of manufacture of polyvinyl alcohol fibres comprising the steps of:
providing a polyvinyl alcohol composition comprising homopolymeric polyvinyl alcohol having a degree of hydrolysis of 88% to 98% or greater; and a molecular weight in the range from 22,000 to 38,000
a plasticiser selected from the group consisting of: sugar alcohols, diols, triols, polyols and mixtures thereof; and
a stabilizer selected from the group consisting of: sodium stearate, potassium oleate, sodium benzoate, calcium stearate, stearic acid, dimethyl, propionic acid and mixtures thereof;
melting the composition at a temperature from 220°C to 230°C;
extruding the melted composition to form an extrudate;
forming the extrudate into molten fibres; and
allowing the molten fibres to solidify to form solid fibres.

2. A method as claimed in claim 1, wherein the melt flow index of the polyvinyl alcohol composition is in the range 30-70, preferably 30-60, preferably 30-50 g/10min.

3. A method as claimed in any preceding claim, wherein the polyvinyl alcohol has a molecular weight in the range 22,000 to 38,000, preferably in the range 26,000 to 35,000 more preferably in the range of 26,800 to 34,600.

4. A method as claimed in any preceding claim, wherein the polyvinyl alcohol has a degree of hydrolysis of 95-98wt%.

5. A method as claimed in any preceding claim, wherein the polyvinyl alcohol composition is made by a method comprising the steps of introducing into a mixing reactor a polyvinyl alcohol polymer comprising homopolymeric polyvinyl alcohol or a blend thereof having a degree of hydrolysis in the range of 88 wt% to 98 wt% or more;
wherein the mixing reactor comprises a blending chamber having a primary inlet, a primary outlet and at least two inter-engaging components extending between the primary inlet and primary outlet, the components being arranged to apply a shearing force to the polymer while the polymer is conveyed by the components from the inlet through a reaction zone to the outlet;
one or more secondary inlets located downstream from the primary inlet for introducing reactants comprising a processing aid, a plasticiser and a reactive stabiliser to the chamber to form a reaction mixture;
wherein the plasticiser is selected from the group consisting of: sugar alcohols, diols, triols, polyols and mixtures thereof;
wherein the reactive stabiliser is selected from the group consisting of:
sodium stearate, potassium oleate, sodium benzoate, calcium stearate, stearic acid, dimethyl propionic acid, and mixtures thereof;
wherein the blending chamber comprises a plurality of heated regions arranged so that the mixture is subjected to a temperature profile whereby the temperature increases from the inlet to the outlet;
a secondary outlet located between the reaction zone and primary outlet arranged to allow removal of processing aid from the chamber;
reacting the processing agent, plasticiser and polymer in the reaction zone to form plasticised polymer; and
allowing the plasticised polymer to pass from the primary outlet.

6. A method as claimed in claim 5, wherein the mixing reactor is an extruder.

7. A method as claimed in any preceding claim, wherein the plasticiser is selected from the group consisting of:
(a) sugar alcohols selected from the group consisting of: diglycerol, triglycerol, fructose, ribose, xylose, D-mannitol, triacetin, and mixtures thereof;
polyols selected from the group consisting of: pentaerythritol, dipentaerythritol, and mixtures thereof;
(b) diols selected from the group consisting of: methyl pentanediol, 1,2-propanediol, 1,4-butanediol, 2-hydroxy-1,3-propanediol, 3-methyl-1,3-butanediol, 3,3-dimethyl-1,2-butanediol, and mixtures thereof;
(c) glycols selected from the group consisting of: polyethylene glycol 300, polyethylene glycol 400, alkoxylated polyethylene glycol, and mixtures thereof;
(d) caprolactam, tricyclic trimethylolpropane formal, rosin esters, euricamide, and mixtures thereof.

8. A method as claimed in any preceding claim, wherein a combination of two plasticisers is used, the plasticisers being selected from dipentaerythritol, methyl pentanediol, triacetin, 2-hydroxy-1,3-propanediol, 3,3-dimethyl-1,2-butanediol, tricyclic trimethylolpropane formal, D-mannitol, triglycerol, and xylose.

9. A method as claimed in any preceding claim, wherein the total amount of plasticer is from 15 wt% to 30 wt%.

10. A method as claimed in any preceding claim, wherein the stabiliser is sodium benzoate.

11. A method as claimed in any preceding claim, wherein the polymer composition is a blend of two or more polyvinyl alcohol homopolymers having the same molecular weight and different degrees of hydrolysis.

12. A method as claimed in any of claims 1 to 11, wherein the polymer composition is a blend of two or more polyvinyl alcohol homopolymers having the same degree of hydrolysis and different molecular weights.

13. A polyvinyl alcohol fibre manufactured in accordance with any preceding claim.

14. A non-woven fibre product made in accordance with the method of any of claims 1 to 11.

15. A non-woven fibre product as claimed in claim 14, wherein the product is a disposable wipe.
